Europäisches Patentamt

European Patent Office

Office européen des brevets

(19)

(11) Veröffentlichungsnummer: **0 223 866**
**B1**

(12) **EUROPÄISCHE PATENTSCHRIFT**

(45) Veröffentlichungstag der Patentschrift:
**15.03.89**

(51) Int. Cl.⁴: **C03B 7/06**

(21) Anmeldenummer: **85112107.9**

(22) Anmeldetag: **24.09.85**

(54) **Verfahren zur Angleichung der Temperatur über den Querschnitt eines Glasstroms und Vorherd zur Durchführung des Verfahrens.**

(43) Veröffentlichungstag der Anmeldung:
**03.06.87 Patentblatt 87/23**

(45) Bekanntmachung des Hinweises auf die Patenterteilung:
**15.03.89 Patentblatt 89/11**

(84) Benannte Vertragsstaaten:
**AT BE CH DE FR GB IT LI LU NL SE**

(56) Entgegenhaltungen:
**EP-A- 0 167 447**
**DE-A- 3 412 639**
**FR-A- 2 220 480**
**FR-A- 2 350 309**
**US-A- 2 618 906**
**US-A- 2 767 518**
**US-A- 3 600 149**

(73) Patentinhaber: **Himly, Holscher GmbH & Co., Gr. Drakenburg Strasse 132, D-3070 Nienburg(DE)**

(72) Erfinder: **Pape, Rolf, Wilhelm-Busch-Weg 17, D-3071 Rohrsen(DE)**
Erfinder: **van der Meer, Douwe, Siebenbergen 2, D-3071 Heemsen(DE)**
Erfinder: **Evert, Gerhard, Verdener Landstrasse 221, D-3070 Nienburg(DE)**

(74) Vertreter: **Bolte, Erich, Dipl.-Ing. et al, Holleralee 73, D-2800 Bremen 1(DE)**

## Beschreibung

Die Erfindung betrifft ein Verfahren zur Angleichung der Temperatur über den Querschnitt eines Glasstroms bzw. Glasbads in einem Glaskanal oder Vorherd in Verbindung mit einer regelbaren Heizung, die im wesentlichen horizontal gerichtete Flammen oberhalb des Glasbads verwendet, sowie einen Vorherd für die Glasherstellung mit einer Glasbad-Rinne, einem oberhalb der Glasbad-Rinne angeordneten Feuerungsraum und mit an den Seiten der Glasbad-Rinne angeordnetem Horizontalbrenner (FR-A 2 220 480).

Bei der Glasherstellung wird das Rohmaterial in einer Schmelze angeschmolzen und dann als Glasschmelze durch einen oder mehrere beheizte Kanäle von sogenannten Vorherden, an deren Kopf normalerweise eine im Fachjargon als "Speiser" bezeichnete Dosiereinrichtung angebracht ist, zu einer oder mehreren Formgebungsmaschinen geleitet. In dem Vorherd wird die Glasschmelze langsam abgekühlt, wofür eine regelbare Beheizung verwendet wird. Über die Einstellung der Heizleistung und/oder das Verändern von Wärmeabstrahlöffnungen wird die Temperatur des Glasstroms geregelt. Dazu erfolgt bei dem aus der FR-A 2 220 480 bekannten Vorherd eine Beheizung des Feuerungsraums durch Horizontalbrenner, die horizontal gerichtete Flammen erzeugen.

Weiterhin ist es aus der US-A 2 618 906 und der US-A 2 767 518 bekannt, Vorherden oberhalb des Feuerungsraumes, nämlich in einer ebenen Abdeckplatte desselben, nur mit Vertikalbrennern zu versehen.

Die bekannten Vorherde haben den Nachteil, daß die Flammen nur in einer Richtung auf das Glasbad einstrahlen. Das führt zu einer inhomogenen Temperaturverteilung über den Querschnitt des Glasbads bzw. des Glasstroms. Die dadurch in der Praxis auftretenden Temperaturdifferenzen sind insbesondere bei der Herstellung maschinell gefertigter, präziser Dünnwand-Hohlglaskörper nachteilig, da dadurch im Glasbad enstehende Temperaturdifferenzen sich bis in die Glastropfen hineinziehen und die gleichmäßige Wandstärke des Endprodukts negativ beeinflussen.

Hiervon ausgehend, liegt der Erfindung die Aufgabe zugrunde, ein Verfahren zur Angleichung der Temperatur über den Querschnitt eines Glasstroms und einen zur Durchführung des Verfahrens dienenden Vorherd zu schaffen, wodurch eine möglichst homogene Temperaturverteilung über den Querschnitt des Glasstroms bzw. des Glasbads erreicht wird.

Zur Lösung dieser Aufgabe ist das eingangs genannte Verfahren dadurch gekennzeichnet, daß zusätzliche Flammen von oben auf das Glasbad oder den Glasstrom gerichtet werden.

Der Vorherd der eingangs genannten Art ist zur Lösung der gestellten Aufgabe gekennzeichnet durch zusätzliche, vertikal gerichtete Brenner, nämlich Vertikalbrenner, die oberhalb des Feuerungsraumes in dessen Oberbaugewölbe angeordnet sind.

Vorteilhafte Ausgestaltungen und Weiterbildungen der Erfindung sind den Unteransprüchen zu entnehmen.

Im folgenden wird die Erfindung anhand von Ausführungsbeispielen im Zusammenhang mit der Zeichnung näher erläutert.

Es zeigen:

Fig. 1 einen Querschnitt eines Vorherdes nach einem Ausführungsbeispiel der Erfindung;

Fig. 2 eine vergrößerte Schnittansicht eines bei dem Vorherd nach der Erfindung verwendeten Vertikalbrenners;

Fig. 3 einen Querschnitt des Vorherdes nach der Erfindung in einer anderen Schnittebene;

Fig. 4 einen Querschnitt eines Vorherdes nach einem anderen Ausführungsbeispiel der Erfindung;

Fig. 5 einen Querschnitt ähnlich Fig. 4, genommen an einer anderen Schnittebene; und

Fig. 6 einen Querschnitt eines Vorherdes nach einem weiteren Ausführungsbeispiel der Erfindung.

Gleiche Bezugszeichen in den einzelnen Figuren bezeichnen gleiche oder einander entsprechende Teile.

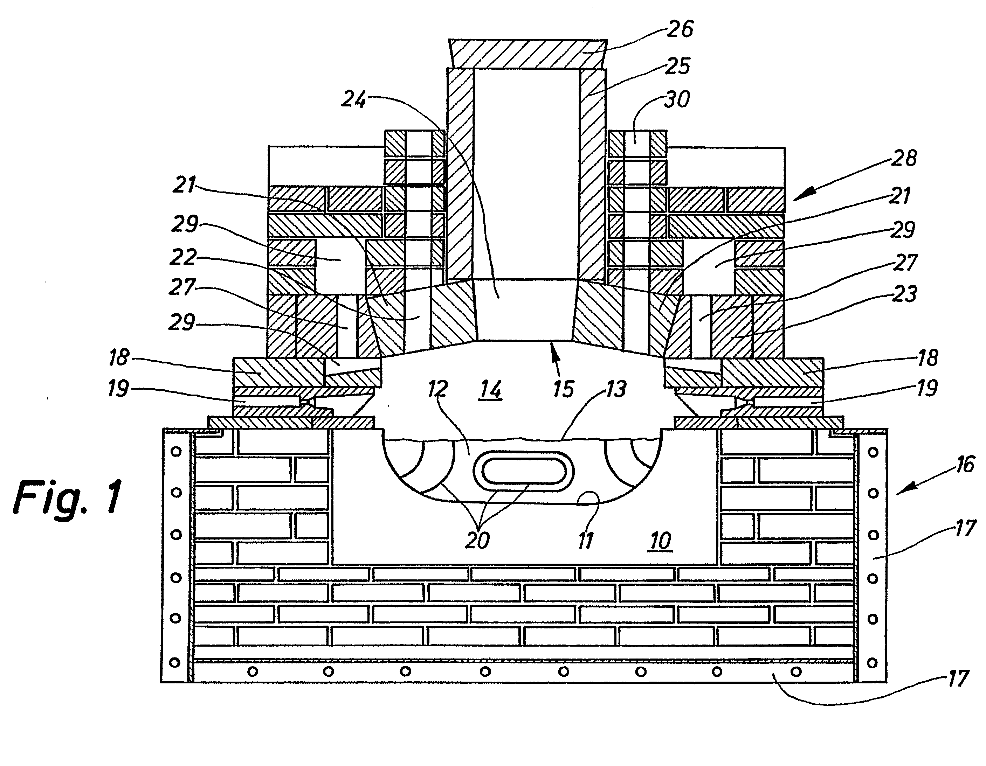

Der Vorherd gemäß Fig. 1 besitzt einen Rinnenstein 10 mit einer muldenförmigen Glasbad-Rinne 11, in der ein Glasbad 12 in einem Glasstrom fließt. Die Glasbadoberfläche 13 ist von einem Feuerungsraum 14 umschlossen, der ein Oberbaugewölbe 15 aufweist.

Der Rinnenstein 10 ist seitlich und nach unten durch einen Vorherdunterbau 16 isoliert. Der Vorherdunterbau 16 ist aus Steinen gemauert und von einem Stahlgerüst 17 eingefaßt.

Zwischen dem Oberbaugewölbe 15 und den seitlichen, nach oben weisenden Flächen des Rinnensteines 10 sowie der Oberkante des Vorherdunterbaus 16 sind gemauerte Seitenwände des Feuerungsraumes 14 vorhanden. Einige Steine dieser Seitenwände sind nun als Horizontalbrennerstein 18 ausbebildet und haltern in einer horizontalen Bohrung Horizontalbrenner 19, deren Flammen im wesentlichen horizontal in den Feuerungsraum 14 münden und die Glasoberfläche 13 überstreichen.

Werden allein diese Horizontalbrenner 19 betrieben, so ergibt sich in dem Glasbad 12 eine Temperaturverteilung, die durch Isothermen 20 angedeutet ist. In der Mitte des Glasbads 12 ist die höchste Temperatur (von beispielsweise 1160°C), während die Temperatur an den seitlichen Bereichen der Glasbad-Rinne 11 geringer ist und beispielsweise bei der dem Seitenrand am nächsten liegenden Isotherme 20 etwa 1100°C beträgt.

Mit der Erfindung werden nun zusätzliche Flammen von oben und insbesondere vertikal auf die kälteren Zonen des Glasbades 12 gerichtet. Hierzu sind in dem Ausführungsbeispiel der Fig. 1 in dem Oberbaugewölbe 15 Vertikalbrennersteine 21 vorgesehen, die oberhalb der Randzonen der Glasbad-Rinne 11 liegen. Diese Vertikalbrennersteine 21 besitzen hier senkrecht zur Glasoberfläche 13 gerichtete Bohrungen 22, in welche ein Vertikalbrenner 31 eingesetzt werden kann. Die Vertikalbrennersteine 21 sind in dem Ausführungsbeispiel der Fig. 1 trapezförmig, so daß sie durch Gewölbedruck zwischen horizontal ausgerichteten Gewölbesteinen 23 und einem Gewölbeschließstein 24 gehalten werden. Der Gewölbeschließstein 24 besitzt hier eine mittige Öffnung, die in einen Abzug 25 mündet, der mit einem Deckel 26 verschließbar ist. Durch Öffnen des Deckels 26 können die Wärmeabstrahlung von dem Glasbad 12 und der Abzug der Verbrennungsgase stufenlos eingestellt werden, was in gewissem Umfange eine Temperaturregelung erlaubt. Die seitlichen Gewölbesteine 23 besitzen hier ebenfalls Bohrungen 27, die zusammen mit weiteren Duchgängen in dem Vorherdoberbau 28 Lufteintrittskanäle 29 für den Feuerungsraum 14 bilden. Diese Lufteintrittskanäle 29 können allerdings auch fortgelassen werden. Der Vorherdoberbau 28 ist ebenfalls aus Steinen gemauert und bildet somit eine Isolierung. Die senkrecht oberhalb der Bohrung 22 liegenden Steine des Vorherdoberbaus 28 haben ebenfalls Bohrungen, die einen Kanal 30 für die Vertikalbrenner 31 bilden.

Obwohl in Fig. 1 die Horizontalbrenner 19 und die Vertikalbrenner 31 in einer Ebene liegend dargestellt sind, sei darauf hingewiesen, daß diese Brenner in Längsrichtung des Vorherds versetzt, d.h. "auf Lücke" angeordnet sein können.

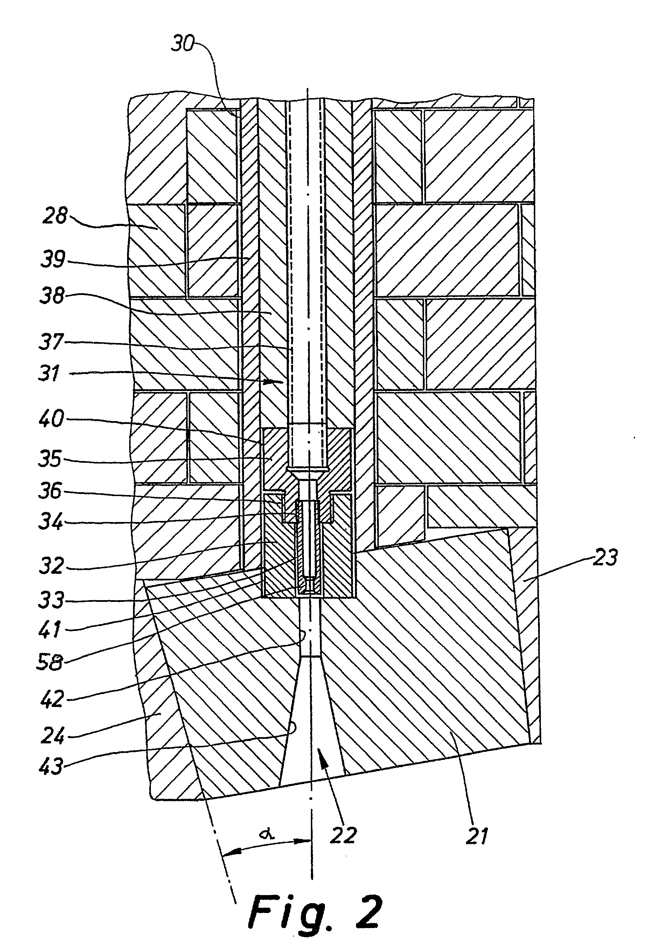

Fig. 2 zeigt detaillierter den Vertikalbrenner 31 und dessen Halterung. Der Vertikalbrenner 31, der von oben in den Kanal 30 und die Bohrung 22 (Fig. 1) einsetzbar ist, enthält eine Brennerdüse 58 aus feuerfestem Stahl. Diese Brennerdüse 58 mündet von oben in die Bohrung 22 des Vertikalbrennersteines 21. Die Brennerdüse 58 ist von einem Füllstück 32 aus feuerfestem Stahl umgeben, wobei zwischen Brennerdüse 58 und Füllstück 32 ein Spalt 33 vorhanden ist, der Wärmeausdehnungen ermöglicht und eine gewisse thermische Isolierung bildet. Das obere Ende der Brennerdüse 58 ist mit einem Gewinde 34 in einen Brennerhalter 35 aus feuerfestem Stahl eingeschraubt, wobei der Brennerhalter 35 seinerseits über ein Gewinde 36 mit einem Gewindeschaft in eine Gewindebohrung des Füllstückes 32 eingeschraubt ist. In das obere Ende des Brennerhalters 35 ist ein Rohr 37 aus feuerfestem Stahl eingeschraubt.

Das Rohr 37 ist mit Mineralwolle 38 ummantelt und in einen Stahlmantel 39 eingesetzt, wobei sich der Stahlmantel 39 über den Brennerhalter 35 und teilweise auch über das Füllstück 32 erstreckt. Zwischen dem Füllstück 32 bzw. dem Brennerhalter 35 und dem Stahlmantel 39 ist ebenfalls ein Spalt 40 vorhanden, der thermische Ausdehnungen ermöglicht und für eine gewisse thermische Isolierung sorgt. Das untere Ende des Stahlmantels 39 ist abgeschrägt, wobei die Abschrägung an die Neigung der Oberseite des Vertikalbrennersteines 21 angepaßt ist. Die Unterseite des Stahlmantels 39 liegt damit bündig auf dem Vertikalbrennerstein 21 auf und wird von diesem gehalten.

Die Bohrung 22 des Vertikalbrennersteines 21 besitzt drei Abschnitte. Ein erster oberer Abschnitt 41 hat einen Durchmesser, der im wesentlichen dem Innendurchmesser des Stahlmantels 39 entspricht. Daran schließt sich ein mittlerer Abschnitt 42 an, dessen Durchmesser kleiner ist und in etwa an den Durchmesser der Brennerdüse 58 angepaßt ist. Daran wiederum schließt sich ein unterer Abschnitt 43 an, der nach unten hin konisch aufgeweitet bzw. aufgefächert ist. Die Mittelachse aller drei Abschnitte 41, 42, 43 entspricht der Mittelachse der Brennerdüse 58 und des Rohres 37. Diese Mittelachse steht unter einem Winkel α zu den Seitenwänden des trapezförmigen Vertikalbrennersteines 21, wobei die Achse im wesentlichen senkrecht zur Glasbadoberfläche 13 steht.

Wie erwähnt sind die Brennerdüse 58, das Rohr 37, das Füllstück 32 und der Brennerhalter 35 aus hochtemperaturbeständigem Stahl, womit auch verhindert wird, daß bei den hohen auftretenden Temperaturen Zunder entsteht und in das Glasbad 12 fallen kann.

Der Außendurchmesser des Stahlmantels 39 ist kleiner als der Durchmesser des Kanales 30, so daß auch hier ein Spalt 40 gebildet ist, der eine thermische Ausdehnung des Stahlmantels 39 erlaubt und der gleichzeitig als thermische Isolierung dient.

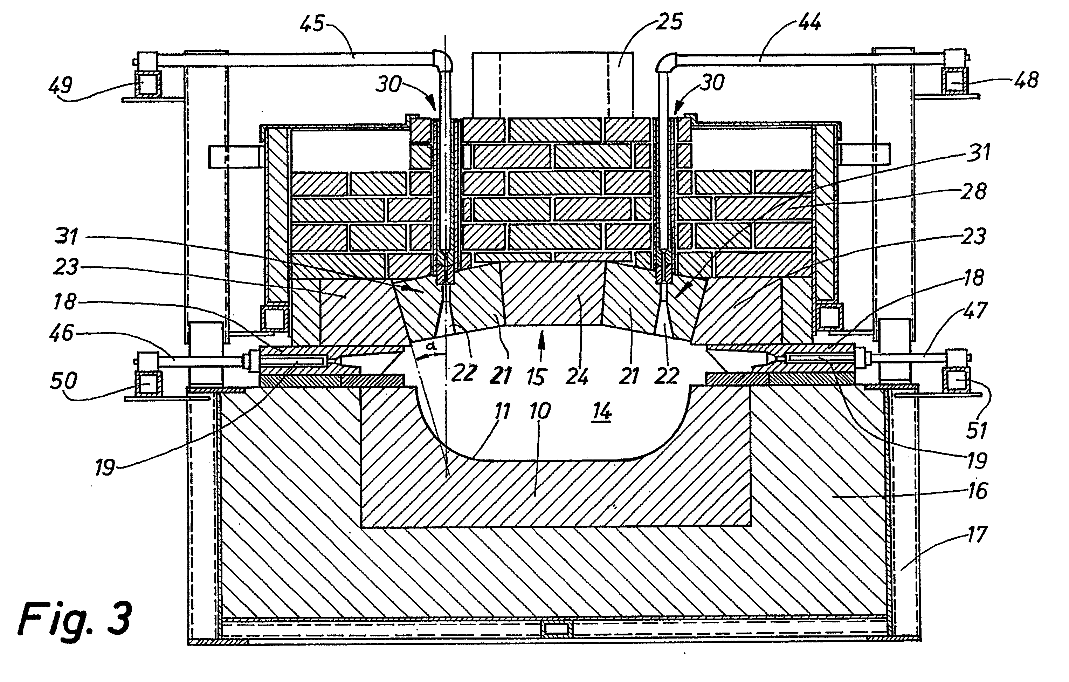

Fig. 3 zeigt einen Vorherd ähnlich Fig. 1, wobei die Schnittebene jedoch an einer anderen Stelle in Längsrichtung des Vorherds liegt, und zwar an einer Stelle, wo kein Abzug vorhanden ist. Weiterhin sind in Fig. 3 – im Gegensatz zu Fig. 1 – die Vertikalbrenner 31 gem. Fig. 2 eingebaut. Der Gewölbeschließstein 24 ist hier ein geschlossener, trapezförmiger Stein, der von oben durch den Vorherdoberbau 28 belastet ist.

Fig. 3 zeigt noch Rohrleitungen 44 und 45, über welche ein brennbares Gasgemisch, wie z.B. Erdgas, zu den Vertikalbrennern 31 geleitet wird. Ebenso sind Rohrleitungen 46 und 47 zu erkennen, über die die Horizontalbrenner 19 versorgt werden. Die Rohrleitungen 44, 45, 46 und 47 sind an längs des Vorherds verlaufende Gaskanäle 48, 49, 50 bzw. 51 angeschlossen, welche sämtliche längs des Vorofens verteilte Brenner mit brennbarem Gas versorgen.

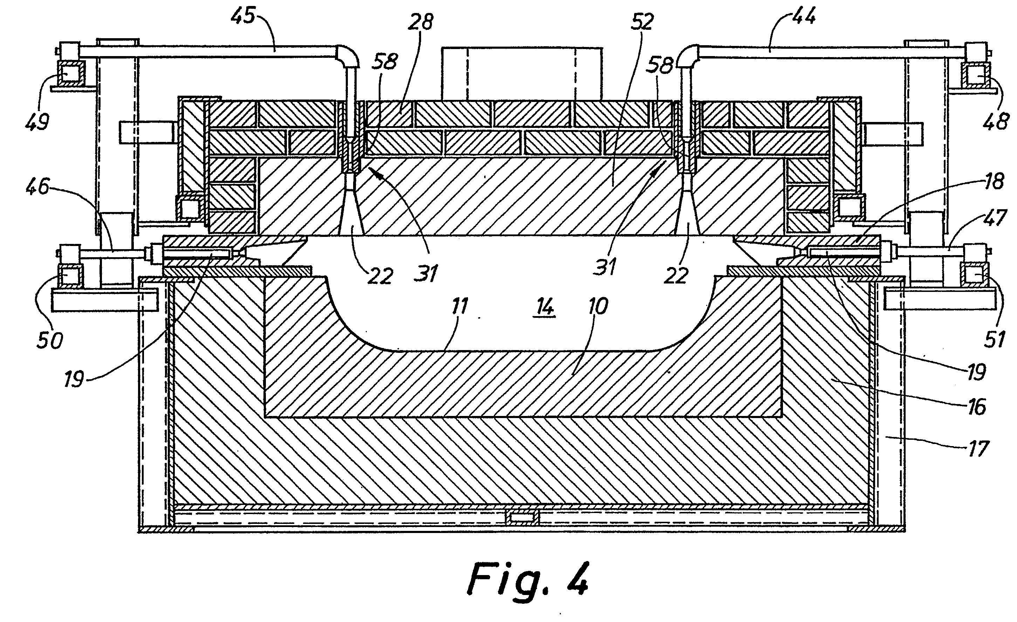

Fig. 4 zeigt ein weiteres Ausführungsbeispiel des Vorherdes nach der Erfindung bzw. einen an anderer Stelle des Vorherds genommenen Querschnitt desselben. Im Gegensatz zu den Fig. 1 und 3 ist hier kein Oberbau-"Gewölbe" vorgesehen, sondern lediglich eine ebene Schließplatte 52, die seitlich auf den Horizontalbrennersteinen 18 aufliegt und die Bohrungen 22 zur Aufnahme der Vertikalbrenner 31 mit deren Brennerdüsen 58 besitzt. Der Querschnitt der Fig. 4 wird vorzugsweise in der sogenannten "Egalisierzone" des Vorherds verwendet, die den letzten Abschnitt des Vorherdes vor dem Glasaustritt bildet. Hier sind die Temperaturen niedriger als in der Eingangsstufe des Vorherds, so daß aus Stabilitätsgründen die durchgehende Schließplatte 52 anwendbar ist. Analog zu der Anordnung der Vertikalbrenner 31 bei den Fig. 1 und 3 sind auch bei Fig. 4 diese oberhalb des seitlichen Randes der Glasbad-Rinne 11 angeordnet. Die übrigen Teile der Fig. 4 entsprechen im wesentlichen denen der Fig. 3, so daß hierauf nicht näher eingegangen werden muß. Aufgrund der niedrigeren Temperaturen kann allerdings auch der Vorherdoberbau 28 flacher sein.

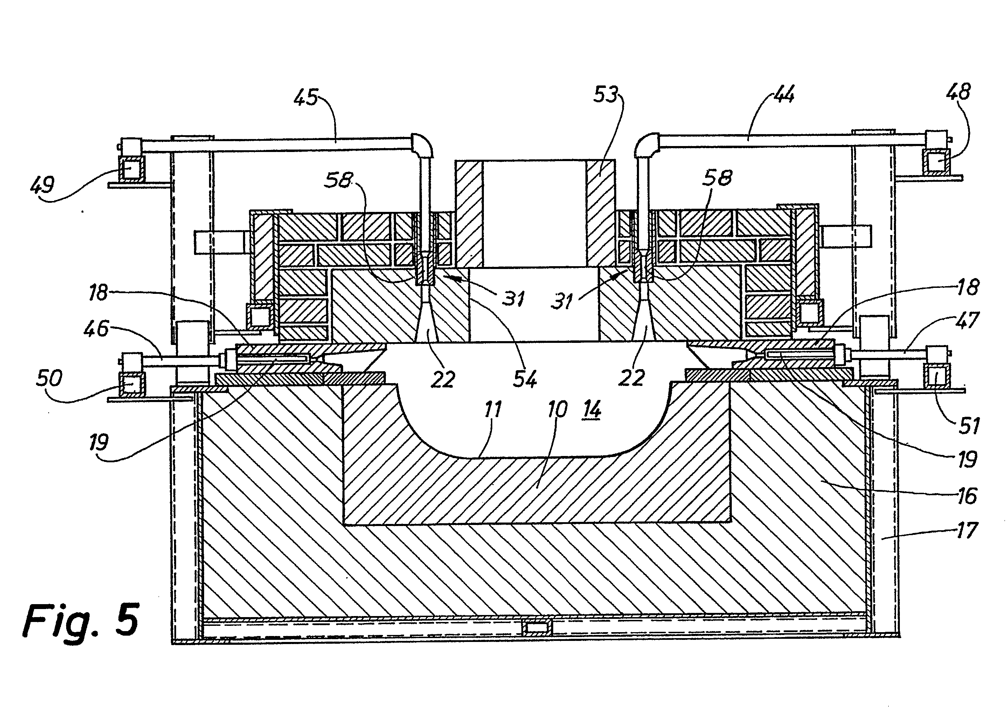

Fig. 5 zeigt einen Querschnitt ähnlich Fig. 4, wobei der einzige Unterschied lediglich in einem Abzugsschacht 53 für Verbrennungsgase liegt und darin, daß die Schließplatte 52, die auch die Vertikalbrenner 31 aufnimmt, eine mittige Öffnung 54 für den Abzugsschacht 53 besitzt. Auch der in Fig. 5 gezeigte Querschnitt wird vorzugsweise in der Egalisierzone des Vorherdes verwendet.

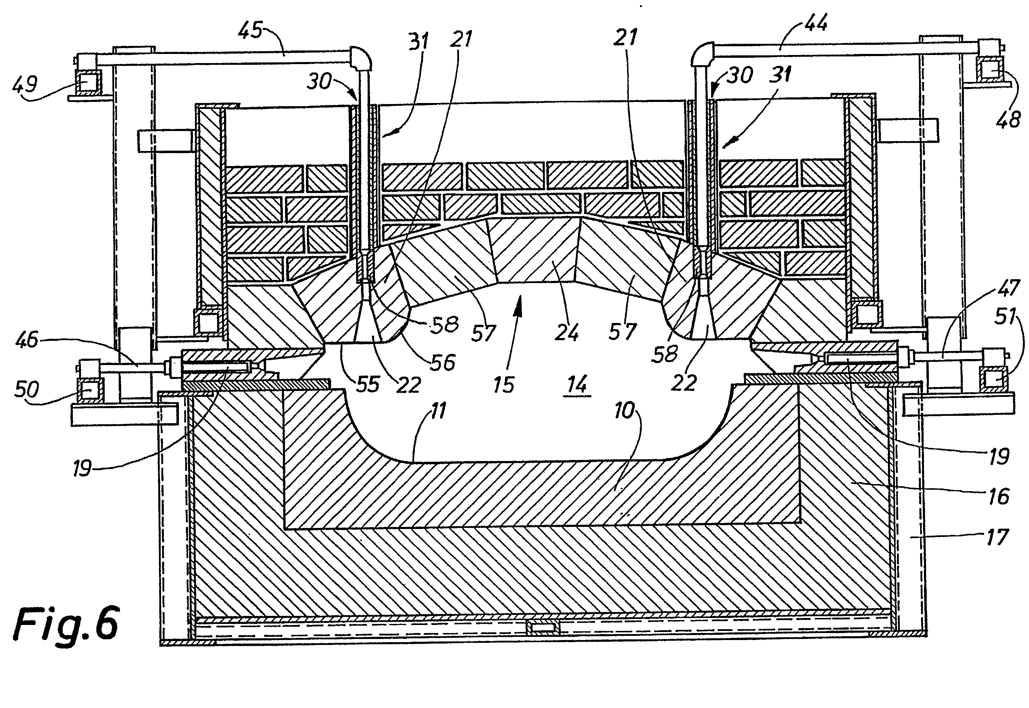

Fig. 6 zeigt schließlich eine weitere Variante nach der Erfindung, die sich von den bisher beschriebenen Varianten durch das Oberbaugewölbe 15 und die Form der Vertikalbrennersteine 21 unterscheidet.

Die Vertikalbrennersteine 21 der Fig. 6 haben zwar ebenfalls schräge Seitenwände, wie für den Bau eines Gewölbes erforderlich; ihre nach unten weisenden Seiten 55 verlaufen jedoch parallel zur Glasbadoberfläche 13 und münden über einen gekrümmten Abschnitt 56 in die zur Mitte des Feuerungsraumes 14 hin weisende Seitenwand. Hierzu wird ein besserer Schutz gegen Wärmeabstrahlung erreicht. Die Bohrung 22 sowie die Vertikalbrenner 31 entsprechen ansonsten dem Ausführbeispiel der Fig. 2. Das Oberbaugewölbe 15 der Fig. 6 besitzt, ähnlich wie bei dem Ausführungsbeispiel der Fig. 3, einen mittigen Gewölbeschließstein 24 mit trapezförmigem Querschnitt. Zwischen diesem Gewölbeschließstein 24 und den Vertikalbrennersteinen 21 sind zu beiden Seiten jeweils noch ein weiterer Gewölbestein 57 mit trapezförmigem Querschnitt angeordnet, so daß ein Gewölbe mit grösserer Spannweite oder auch ein Gewölbe mit kleineren Gewölbesteinen geschaffen wird. Die übrigen Teile der Fig. 6 entsprechen denen der bisher beschriebenen Ausführungsbeispiele, insbesondere der Fig. 3.

## Patentansprüche

1. Verfahren zur Angleichung der Temperatur über den Querschnitt eines Glasstroms bzw. Glasbads (12) in einem Glaskanal oder Vorherd in Verbindung mit einer regelbaren Heizung, die im wesentlichen horizontalgerichtete Flammen oberhalb des Glasbads (12) oder des Glasstroms verwendet, dadurch gekennzeichnet, daß zusätzliche Flammen von oben auf das Glasbad (12) oder den Glasstrom gerichtet werden.

2. Verfahren nach Anspruch 1, dadurch gekennzeichnet, daß die von oben auf das Glasbad (12) oder den Glasstrom gerichteten Flammen im wesentlichen vertikalgerichtet sind.

3. Verfahren nach Anspruch 1 oder 2, dadurch gekennzeichnet, daß die von oben auf das Glasbad (12) oder den Glasstrom gerichteten Flammen im wesentlichen auf die seitlichen Randbereiche des Glasbads (12) bzw. des Glasstroms wirken.

4. Verfahren nach Anspruch 2 oder 3, dadurch gekennzeichnet, daß die vertikalgerichteten Flammen in Strömungsrichung des Glasbads (12) bzw. des Glasstroms gegenüber den horizontalgerichteten Flammen versetzt sind, vorzugsweise auf Lücke.

5. Vorherd für die Glasherstellung mit einer Glasbad-Rinne (11), einem oberhalb der Glasbad-Rinne (11) angeordneten Feuerungsraum (14) und mit an den Seiten der Glasbad-Rinne (11) angeordneten Horizontalbrennern (19), gekennzeichnet durch zusätzliche vertikalgerichtete Brenner, nämlich Vertikalbrenner (31), die oberhalb des Feuerungsraumes (14) in dessen Oberbaugewölbe (15) angeordnet sind.

6. Vorherd nach Anspruch 5, dadurch gekennzeichnet, daß die Vertikalbrenner (31) oberhalb der seitlichen Randzone der Glasbad-Rinne (11) angeordnet sind.

7. Vorherd nach Anspruch 5 oder 6, dadurch gekennzeichnet, daß die Vertikalbrenner (31) in Längsrichtung der Glasbad-Rinne (11) gegenüber den Horizontalbrennern (19) versetzt angeordnet sind, vorzugsweise auf Lücke.

8. Vorherd nach einem der Ansprüche 5, 6 oder 7, dadurch gekennzeichnet, daß die Vertikalbrenner (31) beidseitig der Mitte der Glasbad-Rinne (11) angeordnet sind.

9. Vorherd nach einem oder mehreren der Ansprüche 5–8, dadurch gekennzeichnet, daß die Vertikalbrenner (31) in Deckensteinen des Oberbaugewölbes (15) gehalten sind, daß die Vertikalbrennersteine (21) im wesentlichen trapezförmig ausgebildet und formschlüssig unter Gewölbeschub gehalten sind, und daß die Vertikalbrennersteine (21) schräg verlaufende Bohrungen (22) für den Durchtritt des Vertikalbrenners (31) bzw. dessen Flammen aufweisen, so daß die Flammen im wesentlichen vertikal zur Glasbadoberfläche (13) gerichtet sind.

10. Vorherd nach Anspruch 9, dadurch gekennzeichnet, daß die Vertikalbrennersteine (21) so ausgebildet sind, daß ihre Bohrung (22) senkrecht zur unteren Begrenzungsebene (55) des Vertikalbrennersteines (21) verläuft.

11. Vorherd nach Anspruch 9 oder 10, dadurch gekennzeichnet, daß die Bohrung (22) der Vertikalbrennersteine (21) von oben nach unten einen zylindrischen Abschnitt (41) mit einem ersten Durchmesser zur Aufnahme des Vertikalbrenners (31), einen daran anschließenden zylindrischen Abschnitt (42) mit einem zweiten, kleineren Durchmesser und einen daran anschließenden, konischen bzw. aufgefächerten Abschnitt (43) aufweist.

12. Vorherd nach Anspruch 11, dadurch gekennzeichnet, daß der Vertikalbrenner (31) ein Rohr (37) aus feuerfestem Stahl aufweist, das mit Mineralwolle (38) ummantelt in einem Stahlmantel (39) verläuft, wobei der Stahlmantel (39) mit einem Spalt gegenüber dem Oberbaugewölbe (15) bzw. einem darüber angeordneten Vorherdoberbau (28) angeordnet ist.

13. Vorherd nach Anspruch 12, dadurch gekennzeichnet, daß das Rohr (37) an seinem unteren Ende in einen Brennerhalter (35) eingeschraubt ist, welcher formschlüssig in ein Füllstück (32) eingreift und eine Brennerdüse (58) hält, wobei das Füllstück (32) die Brennerdüse (58) mit einem Spalt (33) umgibt und in den Vertikalbrennerstein (21) eingesetzt ist.

14. Vorherd nach Anspruch 13, dadurch gekennzeichnet, daß das Füllstück (32) mit einem radialen Spalt (40) in den Vertikalbrennerstein (21) eingesetzt ist.

15. Vorherd nach einem oder mehreren der Ansprüche 5–14, dadurch gekennzeichnet, daß das Rohr (37), die Brennerdüse (58), der Brennerhalter (35) und das Füllstück (32) aus feuerfestem Stahl sind.

## Claims

1. Method of equalising the temperature over the cross-section of a glass stream or glass bath (12) in a glass channel or forehearth in combination with controllable heating which uses essentially horizontally directed flames above the glass bath (12) or the glass stream, characterised in that additional flames are directed from above onto the glass bath (12) or the glass stream.

2. Method according to Claim 1, characterised in that the flames directed from above onto the glass bath (12) or the glass stream are essentially vertically directed.

3. Method according to Claim 1 or 2, characterised in that the flames directed from above onto the glass bath (12) or the glass stream essentially act on the lateral marginal areas of the glass bath (12) or the glass stream.

4. Method according to Claim 2 or 3, characterised in that the vertically directed flames are offset, preferably staggered, relative to the horizontally directed flames in the direction of flow of the glass bath (12) or glass stream.

5. Forehearth for glass manufacture, comprising a glass-bath channel (11), a firing space (14), arranged above the glass-bath channel (11), and horizontal burners (19) arranged at the sides of the glass-bath channel (11), characterised by additional vertically directed burners, namely vertical burners (31) which are arranged above the fire space (14) in its superstructure arch 15.

6. Forehearth according to Claim 5, characterised in that vertical burners (31) are arranged above the lateral marginal zones of the glass-bath channel (11).

7. Forehearth according to Claim 5 or 6, characterised in that the vertical burners (31) are arranged offset, preferably staggered, relative to the horizontal burners (19) in the longitudinal direction of the glass-bath channel (11).

8. Forehearth according to any one of Claims 5, 6 or 7, characterised in that the vertical burners (31) are arranged on both sides of the centre of the glass-bath channel (11).

9. Forehearth according to one or more of Claims 5–8, characterised in that the vertical burners (31) are held in cap bricks of the superstructure arch (15), that the vertical-burner bricks (21) are essentially of trapezoidal design and are held in a positive-locking manner under arch pressure, and that the vertical-burner bricks (21) have obliquely running bores (22) for the passage of the vertical burner (31) or its flames so that the flames are essentially directed vertically to the glass-bath surface (13).

10 Forehearth according to Claim 9, characterised in that the vertical-burner bricks (21) are designed in such a way that their bore (22) runs perpendicularly to the lower boundary plane (55) of the vertical-burner brick (21).

11. Forehearth according to Claim 9 or 10, characterised in that the bore (22) of the vertical-burner bricks (21), from top to bottom, has a cylindrical section (41), having a first diameter for accommodating the vertical burner (31), an adjoining cylindrical section (42), having a second, smaller diameter, and an adjoining, conical or fanned-out section (43).

12. Forehearth according to Claim 11, characterised in that the vertical burner (31) has a tube (37) of refractory steel which, lagged with mineral wool (38), runs in a steel jacket (39), the steel jacket (39) being arranged with a gap relative to the superstructure arch (15) or to a forehearth superstructure (28) arranged thereabove.

13. Forehearth according to Claim 12, characterised in that the tube (37), at its lower end, is screwed into a burner holder (35) which engages in a positive-locking manner into a filler piece (32) and holds a burner nozzle (58), the filler piece (32) surrounding the burner nozzle (58) with a gap (33) and being inserted into the vertical-burner brick (21).

14. Forehearth according to Claim 13, characterised in that the filler piece (32) is inserted into the vertical-burner brick (21) with a radial gap (40).

15. Forehearth according to one or more of Claims 5–14, characterised in that the tube (37), the burner nozzle (58), the burner holder (35) and the filler piece (32) are made of refractory steel.

## Revendications

1. Procédé pour équilibrer la température sur la section transversale d'un courant de verre ou d'un bain de verre (12) dans un canal à verre ou canal de distribution en liaison avec un chauffage réglable, qui utilise des flammes dirigées sensiblement horizontalement au-dessus du bain de verre (12) ou du courant de verre, caractérisé en ce que des flammes supplémentaires sont dirigées depuis le haut sur le bain de verre (12) ou le courant de verre.

2. Procédé suivant la revendication 1, caractérisé en ce que les flammes dirigées depuis le haut sur le bain de verre (12) ou le courant de verre sont dirigées sensiblement verticalement.

3. Procédé suivant l'une des revendications 1 et 2, caractérisé en ce que les flammes dirigées depuis le haut sur le bain de verre (12) ou le courant de verre agissent sensiblement sur les zones marginales latérales du bain de verre (12) ou du courant de verre.

4. Procédé suivant l'une des revendications 2 et 3, caractérisé en ce que les flammes dirigées verticalement sont, dans la direction de l'écoulement du bain de verre (12) ou du courant de verre, décalées par rapport aux flammes dirigées horizontalement, en étant de préférence sur des interstices.

5. Canal de distribution pour la fabrication de verre comprenant une goulotte d'écoulement de verre (11), une chambre de chauffe (14) agencée au-dessus de la goulotte d'écoulement de verre (11) et des brûleurs horizontaux (19) agencés sur les côtés de la goulotte d'écoulement de verre (11), caractérisé par des brûleurs supplémentaires dirigés verticalement, c'est-a-dire des brûleurs verticaux (31), qui sont agencés au-dessus de la chambre de chauffe (14) dans la voûte (15) de sa superstructure.

6. Canal de distribution suivant la revendication 5, caractérisé en ce que les brûleurs verticaux (31) sont agencés au-dessus de la zone marginale latérale de la goulotte d'écoulement de verre (11).

7. Canal de distribution suivant l'une des revendications 5 et 6, caractérisé en ce que les brûleurs verticaux (31) sont, dans la direction longitudinale de la goulotte d'écoulement du verre (11), agencés de manière décalée par rapport aux brûleurs horizontaux (19), en étant de préférence sur des interstices.

8. Canal de distribution suivant une des revendications 5, 6 ou 7, caractérisé en ce que les brûleurs verticaux (31) sont agencés de part et d'autre du centre de la goulotte d'écoulement de verre (11).

9. Canal de distribution suivant une ou plusiers des revendications 5 à 8, caractérisé en ce que les brûleurs verticaux (31) sont maintenus dans des briques de plafond de la voûte (15) de la superstructure, en ce que les briques de brûleur vertical (21) sont realisées sensiblement sous une forme trapézoïdale et sont maintenues par une liaison de forme sous la poussée de la voûte et en ce que les briques de brûleur vertical (21) présentent des perforations (22) qui s'étendent en oblique pour le passage du brûleur vertical (31) ou respectivement de ses flammes de façon que les flammes soient dirigées sensiblement verticalement par rapport à la surface (13) du bain de verre.

10. Canal de distribution suivant la revendication 9, caractérisé en ce que les briques de brûleur vertical (21) sont réalisées de façon que leur perforation (22) s'étende perpendiculairement au plan limite inférieur (55) de la brique de brûleur vertical (21).

11. Canal de distribution suivant l'une des revendications 9 et 10, caractérisé en ce que la perforation (22) des briques de brûleur vertical (21) présente, du haut vers le bas, une section cylindrique (41) ayant un premier diamètre pour recevoir le brûleur vertical (31), une section cylindrique (42) raccordée à celle-ci et ayant un deuxième diamètre, plus petite, et, raccordée à celle-ci, une section (43) conique ou conformée en éventail.

12. Canal de distribution suivant la revendication 11, caractérisé en ce que le brûleur vertical (31) présente un tube (37) en acier résistant au feu, qui, chemisé par de la laine minérale (38), s'étend dans une enveloppe d'acier (39), l'enveloppe d'acier (39) étant agencée avec un intervalle par rapport à la voûte (15) de la superstructure ou respectivement à une superstructure (28) agencée par-dessus.

13. Canal de distribution suivant la revendication 12, caractérisé en ce que le tube (37) est, à son extrémité inférieure, vissé dans un support de brûleur (35) qui pénètre, en formant une liaison de forme, dans une pièce de remplissage (32) et supporte un bec de brûleur (58), la pièce de remplissage (32) entourant le bec (58) avec un intervalle (33) et étant introduite dans la brique de brûleur vertical (21).

14. Canal de distribution suivant la revendication 13, caractérisé en ce que la pièce de remplissage (32) est introduite avec un intervalle radial (40) dans la brique de brûleur vertical (21).

15. Canal de distribution suivant une ou plusieurs des revendications 5 à 14, caractérisé en ce que le tube (37), le bec de brûleur (58), le support de brûleur (35) et la pièce de remplissage (32) sont en acier résistant au feu.

Fig. 1

EP 0 223 866 B1

**Fig. 2**

Fig. 3

EP 0 223 866 B1

*Fig. 4*

EP 0 223 866 B1

*Fig. 5*

EP 0 223 866 B1

Fig.6